(19) Europäisches Patentamt / European Patent Office / Office européen des brevets

(11) **EP 2 821 347 B1**

(12) **FASCICULE DE BREVET EUROPEEN**

(45) Date de publication et mention
de la délivrance du brevet:
**09.08.2017 Bulletin 2017/32**

(51) Int Cl.:
***B64D 43/02*** *(2006.01)*    ***G01P 5/165*** *(2006.01)*

(21) Numéro de dépôt: **14173344.4**

(22) Date de dépôt: **20.06.2014**

(54) **Aéronef comprenant une sonde de mesure et procédé de détermination de paramètres de vol d'un tel aéronef**

Luftfahrzeug, das eine Messsonde umfasst, und Verfahren zur Bestimmung der Flugparameter eines solchen Luftfahrzeugs

Aircraft including a measuring probe and method for determining flight parameters of such an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2013 FR 1301590**

(43) Date de publication de la demande:
**07.01.2015 Bulletin 2015/02**

(73) Titulaire: **Thales**
**92200 Neuilly Sur Seine (FR)**

(72) Inventeur: **Mandle, Jacques**
**26027 VALENCE CEDEX (FR)**

(74) Mandataire: **Lavoix**
**2, place d'Estienne d'Orves**
**75441 Paris Cedex 09 (FR)**

(56) Documents cités:
**EP-A1- 1 494 032    EP-B1- 1 354 212**
**US-A- 5 616 861**

**Description**

La présente invention concerne les aéronefs et les sondes de mesure équipant ces aéronefs.

Plus précisément, l'invention concerne un aéronef comportant un fuselage et une première sonde de mesure comprenant des moyens de mesure de l'incidence locale, des moyens de mesure de la pression statique et éventuellement des moyens de mesure de la pression totale.

Un tel aéronef est par exemple décrit dans le document EP 1 354 212 B1.

De manière connue, le pilotage d'un aéronef repose sur la détermination de paramètres de vol tels que son altitude, sa vitesse relative à l'air dite vitesse conventionnelle, son incidence, son dérapage, et son nombre de Mach.

La détermination de ces paramètres de vol est effectuée à partir de mesures de la pression statique, de la pression totale et de l'incidence locale à partir desquels ces paramètres de vol sont déterminés.

L'un des paramètres de vol en question est la pression statique à l'infini amont de l'aéronef, qui permet de déterminer, conjointement à la pression totale, certaines informations anémobarométriques dites du « T basique » dont l'altitude de l'aéronef et sa vitesse conventionnelle relativement l'air (connue sous l'acronyme anglophone CAS pour Calibrated Air Speed). Cette pression statique à l'infini amont de l'aéronef est déterminée à partir de la pression statique locale corrigée et du coefficient de pression de l'aéronef. Ce coefficient de pression de l'aéronef correspond à la perturbation de pression engendrée par l'avion. Le coefficient de pression de l'aéronef est d'autre part une fonction de l'incidence locale donnée pour chaque valeur du dérapage et pour chaque valeur de l'incidence de l'aéronef.

Toutefois, les aéronefs connus ne donnent pas entière satisfaction.

En effet, pour la détermination de la pression statique à l'infini amont des aéronefs connus, il est nécessaire de déterminer préalablement une valeur du dérapage ou une valeur de l'incidence de l'aéronef de façon à déterminer la fonction qui à l'incidence locale associe le coefficient de pression de l'aéronef. Ceci est réalisé à partir de plusieurs mesures de l'incidence locale ou de la pression statique elles-mêmes réalisées à des emplacements distincts de l'aéronef. La pression statique à l'infini amont de l'aéronef ne peut alors être déterminée qu'à partir de mesures fournies par au moins deux sondes de mesure situées à des emplacements différents. Ceci se traduit par une importante complexité du système de mesure des paramètres de vol de l'aéronef ainsi que par des contraintes de sûreté de fonctionnement pour ce système.

L'un des objets de l'invention est de proposer un aéronef ne présentant pas ces inconvénients.

A cet effet, l'invention concerne un aéronef selon la revendication 1.

Des caractéristiques optionnelles figurent aux revendications 2 à 5.

L'invention concerne également un procédé de détermination de paramètres de vol d'un aéronef selon l'une quelconque des revendications 1 à 5, comprenant une étape de mesure, au cours de laquelle, via la première sonde de mesure, on réalise au moins une première mesure de la pression statique et une première mesure de l'incidence locale.

Des caractéristiques optionnelles figurent aux revendications 7 à 13.

L'invention sera mieux comprise à la lecture de la description détaillée qui va suivre, donnée uniquement à titre d'exemple et faite en se référant aux Figures annexées, sur lesquelles :

- la Figure 1 est une illustration schématique d'un aéronef ;
- la Figure 2 est une illustration schématique de sondes de mesure de l'aéronef de la Figure 1 ;
- la Figure 3 est une illustration schématique d'une sonde de mesure selon une première variante;
- la Figure 4 est une illustration schématique d'une sonde de mesure selon une deuxième variante;
- la Figure 5 est une courbe de représentation de la variation du coefficient de pression d'une sonde de mesure en fonction de l'incidence de la sonde de mesure ;
- la Figure 6 est une courbe de représentation de la variation du coefficient de pression de l'aéronef en fonction de l'incidence locale ;
- la Figure 7 est un diagramme-bloc illustrant un procédé de détermination de paramètres de vol selon l'invention ; et
- la Figure 8 est une illustration schématique d'une sonde de mesure selon une troisième variante de l'aéronef selon l'invention.

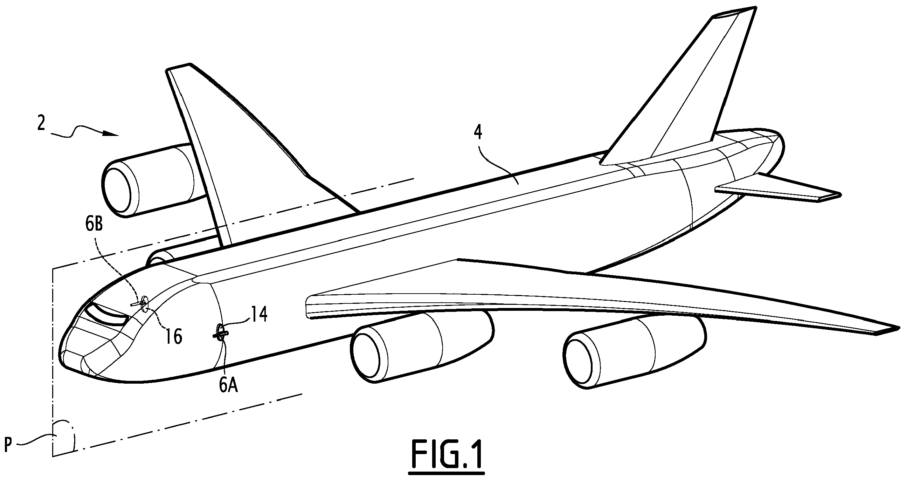

La Figure 1 illustre un aéronef 2 selon l'invention.

L'aéronef 2 comprend un fuselage 4. Le fuselage 4 comprend un tronçon central sensiblement cylindrique prolongé par un nez avant effilé et une queue arrière. Le fuselage 4 présente un plan de symétrie P sensiblement vertical.

L'aéronef 2 comprend en outre une première sonde de mesure 6A et une deuxième sonde de mesure 6B. Les sondes de mesure 6A, 6B sont des sondes dites multifonctions.

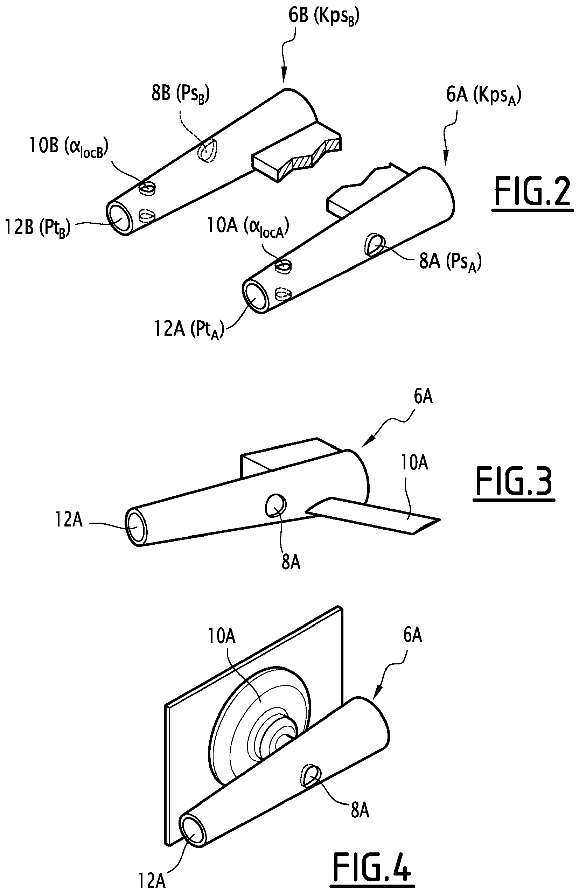

En référence à la Figure 2, les sondes de mesure 6A, 6B comprennent chacune des moyens de mesure de la pression statique 8A, respectivement 8B, des moyens de mesure de l'incidence locale 10A, respectivement 10B et des moyens de mesure de la pression totale 12A, respectivement 12B. Dans la suite, les lettres A et B dans la référence et les indices A et B dans les paramètres se réfèrent respectivement à la première sonde de mesure 6A et la deuxième sonde de mesure 6B.

Dans l'exemple des Figures 1 et 2, chaque sonde de mesure 6A, 6B se présente sous la forme d'un tube dit Pitot-statique s'étendant suivant l'écoulement de l'air le long du fuselage 4. Les moyens de mesure de la pression statique 8A, 8B se présentent sous la forme d'un ou plusieurs orifices disposés sur le tube de la sonde de mesure 6A, 6B, par exemple sur le côté du tube, et orientés sensiblement parallèlement à l'écoulement. Les moyens de mesure de la pression totale 12A, 12B se présentent sous la forme d'un orifice disposé face à l'écoulement à l'extrémité du tube de la sonde 6A, 6B correspondante. Les moyens de mesure de l'incidence locale 10A, 10B sont pneumatiques et se présentent sous la forme de deux orifices respectivement agencés sur et sous le tube de la sonde de mesure 6A, 6B en regard l'un de l'autre. A noter que pour des moyens de mesure de l'incidence locale pneumatiques tels que ceux de la Figure 2, la détermination d'une mesure de l'incidence locale implique la connaissance de la pression statique et de la pression totale.

En variante, en référence à la Figure 3, les moyens de mesure de l'incidence locale 10A de la sonde de mesure 6A comprennent une palette mobile 10A s'alignant dans le lit local du vent et articulée sur le tube de la sonde de mesure.

En variante, en référence à la Figure 4, la première sonde de mesure 6A se présente sous la forme d'un tube Pitot-statique articulé en rotation sur une embase immobile par rapport au fuselage. Les mesures de l'incidence locale de la sonde de mesure 6A sont alors déterminées à partir de l'orientation de la sonde par rapport à l'embase et donc au fuselage.

En variante (non représentée), les moyens de mesure de l'incidence locale 10A, 10B de l'un ou des sondes de mesure comprennent un dispositif à ultrasons.

En variante, une ou les deux sondes de mesure 6A, 6B se présentent sous la forme de sondes à cône, ou encore de tout autre type adapté.

Dans certains modes de réalisation, par exemple dans le mode de réalisation des Figures 2 et 3, les moyens de mesure de la pression statique 8A, 8B et les moyens de mesure de la pression totale 12A, 12B sont immobiles par rapport au fuselage 4 de l'aéronef 2. De ce fait, les coefficients de pression respectifs des sondes de mesure varient avec l'incidence locale. Ceci est décrit plus en détail dans ce qui suit.

Dans d'autres modes de réalisation, par exemple dans le mode de réalisation de la Figure 4, l'une ou les sondes de mesure 6A, 6B sont montées mobiles dans leur ensemble sur le fuselage 4 et s'alignent avec le flux d'air. Ainsi, le coefficient de pression de la ou les sondes de mesure correspondantes est une fonction constante de l'incidence locale, puisque la sonde est toujours alignée dans le flux d'air.

Préférentiellement, les deux sondes de mesure 6A, 6B sont identiques.

Préférentiellement, les deux sondes de mesure 6A, 6B sont disposées symétriquement par rapport au plan de symétrie P de l'aéronef.

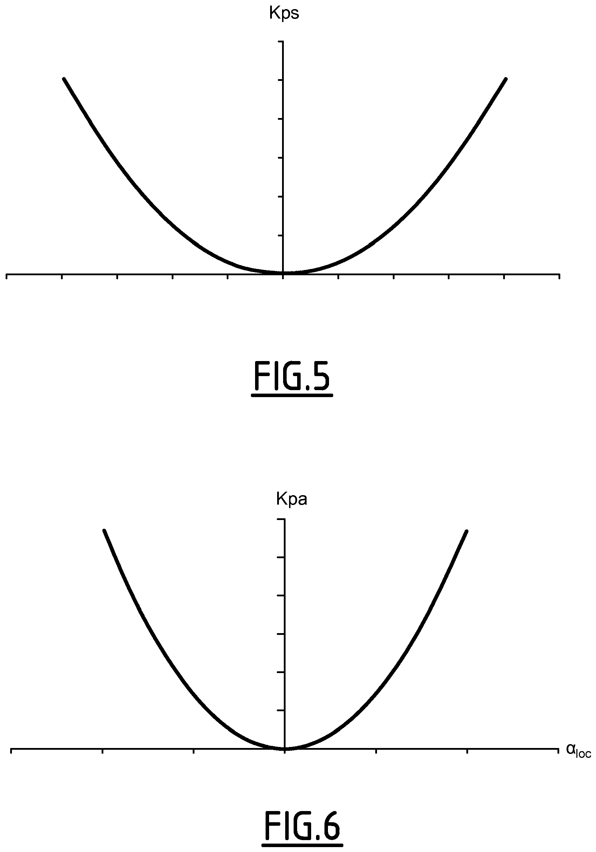

La Figure 5 illustre la variation du coefficient de pression d'une sonde de mesure en fonction de l'incidence de la sonde de mesure, dans le cas d'une sonde fixe, c'est-à-dire qui n'est pas montée mobile dans son ensemble sur le fuselage.

Les sondes de mesure 6A, respectivement 6B présentent chacune un coefficient de pression noté $Kps_A$, respectivement $Kps_B$. Ces coefficients de pression sont spécifiques à la sonde correspondante et correspondent à la perturbation de pression engendrée par la sonde de mesure 6A, 6B correspondante dans un écoulement. Ces coefficients de pression $Kps_A$, $Kps_B$ varient en fonction de l'incidence de la sonde de mesure 6A, 6B correspondante selon une courbe sensiblement parabolique. Une telle courbe est illustrée sur la Figure 5. La Figure 5 illustre plus précisément la variation du coefficient de pression Kps d'une sonde en fonction de l'incidence de la sonde. L'incidence de la sonde correspond précisément à l'incidence locale mesurée par la sonde lorsque celle-ci est disposée sur l'aéronef.

La courbe de variation de chaque coefficient de pression de sonde est par exemple déterminée par calcul, par exemple par CFD, (qui est l'acronyme anglophone de l'expression Computational Fluid Dynamics, qui signifie calculs de mécanique des fluides) puis confirmée par des essais en soufflerie.

En outre, les coefficients de pression $Kps_A$, $Kps_B$ des sondes de mesure 6A, 6B, s'expriment respectivement selon les relations (1) et (2) suivantes:

$$Kps_A = \frac{(Ps_A - Pi_A)}{(Pt_A - Pi_A)} \ (1),$$

et

$$Kps_B = \frac{(Ps_B - Pi_B)}{(Pt_B - Pi_B)} \ (2),$$

où $Ps_A$, $Ps_B$ sont respectivement la mesure de pression statique fournie par la sonde de mesure 6A, respectivement 6B, et $Pt_A$, $Pt_B$ sont respectivement la mesure de pression totale fournie par la sonde de mesure 6A, respectivement 6B. $Pi_A$ et $Pi_B$ sont les pressions statiques qui seraient mesurées à l'emplacement de la première sonde de mesure 6A, respectivement de la deuxième sonde de mesure 6B en l'absence de la sonde correspondante. En d'autres termes, $Pi_A$ et $Pi_B$ correspondent à la composante de la pression statique mesurée $Ps_A$, respectivement $Ps_B$ qui est indépendante de la première sonde de mesure 6A, respectivement de la deuxième sonde de mesure 6B. Dans ce qui suit, Pi sera désignée par l'expression « pression statique indépendante » ou « pression indépendante ».

La Figure 6 illustre à titre d'exemple la variation du coefficient de pression de l'aéronef 2 en fonction de l'incidence locale à dérapage de l'aéronef constant.

Le coefficient de pression de l'aéronef 2 est noté Kpa dans ce qui suit et correspond à la perturbation de pression engendrée par l'aéronef 2 dans l'écoulement. Le coefficient de pression de l'aéronef Kpa est une fonction de l'incidence locale donnée à dérapage de l'aéronef 2 constant ou à incidence de l'aéronef 2 constante. En effet, comme indiqué précédemment, à une valeur donnée de dérapage ou d'incidence de l'aéronef correspond une fonction qui à l'incidence locale associe le coefficient de pression de l'aéronef. L'ensemble des courbes correspondantes forme un maillage ou réseau de courbes paramétrées à iso-dérapage et iso-incidence.

Chacune de ces fonctions présente un graphe sensiblement parabolique, la Figure 6 illustrant un exemple de courbe de variation du coefficient de pression Kpa en fonction de l'incidence locale $\alpha_{loc}$ pour une valeur de dérapage fixée.

De façon générale, deux valeurs distinctes du dérapage ou de l'incidence de l'aéronef 2 se traduisent par des courbes de variations du coefficient de pression Kpa en fonction de l'incidence locale $\alpha_{loc}$ respectives qui seront différentes.

Toutefois, il a été constaté par la Demanderesse que la plupart des aéronefs présente au moins une zone de son fuselage où le coefficient de pression de l'aéronef est une fonction de l'incidence locale qui est unique quelles que soient les valeurs du dérapage et de l'incidence de l'aéronef. C'est-à-dire que dans cette zone, la fonction qui à l'incidence locale associe le coefficient de pression de l'aéronef demeure la même lorsque l'incidence et/ou le dérapage de l'aéronef varient.

Par « pour toutes les valeurs du dérapage et de l'incidence de l'aéronef » et « quel que soit le dérapage et l'incidence de l'aéronef », on entend toutes les valeurs du dérapage et de l'incidence correspondant à des valeurs du domaine de vol de l'aéronef correspondant.

Aussi, dans cette zone, le coefficient de pression de l'aéronef Kpa varie en fonction de l'incidence locale selon une seule courbe qui demeure la même lorsque le dérapage $\beta$ et/ou l'incidence $\alpha$ de l'aéronef 2 varie(nt).

L'emplacement de la ou les zones sur le fuselage 4 est par exemple déterminé par CFD, par laquelle on réalise un maillage informatique de l'aéronef et on détermine la vitesse de l'écoulement en une grande quantité de points de l'aéronef.

Ces calculs sont réalisés pour plusieurs valeurs du dérapage $\beta$ de l'aéronef, par exemple dix valeurs du dérapage $\beta$, ainsi que pour plusieurs valeurs de l'incidence $\alpha$ de l'aéronef, par exemple quarante valeurs de l'incidence de l'aéronef. A partir des résultats obtenus, on déduit l'emplacement de la zone ou les zones du fuselage dans lesquelles les variations du coefficient de pression de l'aéronef en fonction de l'incidence locale suivent une courbe unique quelles que soient les valeurs de l'incidence $\alpha$ et du dérapage $\beta$ de l'aéronef.

En variante, l'emplacement de cette ou ces zones est déterminé en soufflerie, ou encore par toute autre méthode adaptée.

A noter que l'incidence locale $\alpha_{loc}$ varie elle-même en fonction de l'incidence $\alpha$ et du dérapage $\beta$ de l'aéronef. Toutefois, la mesure de l'incidence locale $\alpha_{loc}$ ne requiert pas la détermination préalable de l'incidence $\alpha$ et/ou du dérapage $\beta$ de l'aéronef considéré.

Au moins l'une des sondes de mesure 6A, 6B, par exemple la première sonde de mesure 6A, est disposée dans une première zone 14 du fuselage 4 dans laquelle le coefficient de pression de l'aéronef Kpa est une fonction de l'incidence locale qui est unique quelles que soient les valeurs du dérapage $\beta$ et de l'incidence $\alpha$ de l'aéronef. Comme on le verra par la suite, ceci permet de déterminer une valeur de la pression statique à l'infini amont de l'aéronef 4, notée $P_\infty$ dans ce qui suit, à partir d'une unique sonde de mesure, et non de deux pour les aéronefs connus.

En pratique, il a été constaté que la deuxième zone 16 symétrique de la première zone 14 par rapport au plan de symétrie vertical P du fuselage 4 est également une zone dans laquelle le coefficient de pression de l'aéronef Kpa est une fonction de l'incidence locale qui est unique quelles que soient les valeurs du dérapage et de l'incidence de l'aéronef.

Aussi, préférentiellement, la deuxième sonde de mesure 6B est située dans la deuxième zone 16 symétrique de la première zone 14 par rapport au plan de symétrie vertical P. Ceci a pour effet que la deuxième sonde de mesure 6B permet d'obtenir directement une deuxième valeur de la pression statique à l'infini amont de l'aéronef 4 et ce sans recourir à une sonde de mesure supplémentaire. La détermination de la pression statique à l'infini amont de l'aéronef 4 est décrite plus en détail dans ce qui suit.

A noter qu'en outre, en chaque point du fuselage 4 où l'on a une pression statique $P_{loc}$ en l'absence de sonde de mesure, le coefficient de pression de l'aéronef Kpa s'exprime selon la relation (3) suivante:

$$Kpa = \frac{(P_{loc} - P_\infty)}{(Pt - P_\infty)} \ (3),$$

où Pt est la pression totale à ce point.

Un procédé de détermination de paramètres de vol, ci-après procédé, va maintenant être décrit en référence aux Figures 1 à 5.

Tout d'abord, au cours d'une étape de mesure 20, on réalise au moins une première mesure de l'incidence locale $\alpha_{locA}$ et une première mesure de la pression statique $Ps_A$ via les moyens de mesure de l'incidence locale 10A et les moyens de mesure de la pression statique 8A de la première sonde de mesure 6A. On réalise également une première mesure de la pression totale $Pt_A$ via les moyens de mesure de la pression totale 12A de la première sonde de mesure 6A.

Ensuite, au cours d'une étape de détermination de paramètres de vol 22, on détermine au moins la pression statique à l'infini amont de l'aéronef $P_\infty$.

Pour ce faire, on détermine la valeur du coefficient de pression $Kps_A$ de la première sonde de mesure 6A à partir de la première mesure de l'incidence locale $\alpha_{locA}$ à partir de la courbe de variation du coefficient de pression de la première sonde 6A en fonction de l'incidence locale telle que celle illustrée sur la Figure 5. En pratique, cette courbe de variation est déterminée au préalable et enregistrée.

Ensuite, en se rapportant à la relation (1) dont on connaît tous les termes sauf la pression indépendante $Pi_A$, on détermine la pression indépendante $Pi_A$.

On détermine également la valeur du coefficient de pression de l'aéronef Kpa à partir de la première mesure de l'incidence locale $\alpha_{locA}$ via la courbe de variation du coefficient de pression de l'aéronef Kpa en fonction de l'incidence locale telle que celle illustrée sur la Figure 6. Ceci est rendu possible sans connaissance préalable du dérapage ou de l'incidence de l'aéronef 2 du fait de l'agencement de la première sonde de mesure 6A dans la première zone 14.

Ensuite, on détermine une valeur de la pression statique à l'infini amont de l'aéronef $P_\infty$ à partir de la relation (3) dont on connaît tous les termes sauf $P_\infty$ :

- la pression statique locale $P_{loc}$ à l'emplacement de la première sonde de mesure 6A correspond précisément à la pression statique qui serait mesurée en l'absence de la première sonde de mesure 6A, c'est-à-dire à la pression indépendante $Pi_A$,
- la pression totale Pt est prise égale à la première mesure de pression totale $Pt_A$, et
- la valeur de Kpa a été précédemment déterminée à partir de l'incidence locale $\alpha_{locA}$ mesurée par la première sonde 6A.

Cette pression statique à l'infini amont de l'aéronef $P_\infty$ est ainsi déterminée uniquement à partir des mesures de la première sonde 6A. Elle permet par suite de déterminer les autres paramètres de vol requis pour assurer le pilotage de l'aéronef 2. En pratique, cette détermination repose également sur la pression totale Pt mesurée localement, qui est constante dans l'écoulement.

En variante, au cours du procédé, on détermine en outre une première valeur de l'incidence $\alpha$ de l'aéronef 2 et une première valeur du dérapage $\beta$ de l'aéronef 2.

Pour ce faire, au cours de l'étape de mesure 20, on réalise, via les moyens de mesure de l'incidence locale 10B de la deuxième sonde de mesure 6B, une deuxième mesure de l'incidence locale $\alpha_{locB}$.

Au cours de l'étape de détermination de paramètres de vol 22, on détermine la première valeur de l'incidence $\alpha$ et la première valeur du dérapage $\beta$ à partir des première et deuxième mesures de l'incidence locale $\alpha_{locA}$ et $\alpha_{locB}$.

Cette détermination est bien connue de l'homme du métier et repose notamment sur l'étalonnage initial, qui résulte de calculs effectués par CFD et confirmés par des essais en vol. L'étalonnage fournit entre autres les lois entre les incidences locales $\alpha_{locA}$ et $\alpha_{locB}$ mesurées via les deux sondes de mesure 6A, 6B et l'incidence $\alpha$, ainsi qu'entre ces incidences locales $\alpha_{locA}$ et $\alpha_{locB}$ et le dérapage $\beta$.

En variante encore, au cours du procédé, on détermine une deuxième valeur du dérapage $\beta'$. Dans cette variante, la deuxième sonde de mesure 6B est disposée dans la deuxième zone 16 symétrique de la première zone 14 par rapport au plan de symétrie P.

Pour ce faire, au cours de l'étape de mesure 20, on réalise une deuxième mesure de l'incidence locale $\alpha_{locB}$ via les moyens de mesure de l'incidence locale 10B de la deuxième sonde de mesure 6B. En outre, on réalise une deuxième mesure de la pression totale $Pt_B$ via les moyens de mesure de la pression totale 12B de la deuxième sonde de mesure 6B.

Au cours de l'étape de détermination de paramètres de vol 22, on détermine la deuxième valeur du dérapage $\beta'$ à partir des pressions indépendantes $Pi_A$ et $Pi_B$, d'une mesure de la pression totale, par exemple la première mesure de pression totale $Pt_A$, et de la pression statique à l'infini amont de l'aéronef $P_\infty$.

Pour ce faire, on détermine les pressions indépendantes $Pi_A$ et $Pi_B$ à partir des courbes de variations du coefficient de pression $Kps_A$, $Kps_B$ de chacune des sondes en fonction de l'incidence locale $\alpha_{locA}$, respectivement $\alpha_{locB}$ telles que celle illustrée sur la Figure 5, comme décrit précédemment. Ensuite, on détermine la deuxième valeur du dérapage $\beta'$ à partir de la différence entre les pressions indépendantes $Pi_A$ et $Pi_B$ divisée par la différence entre la pression totale $Pt_A$ et la pression statique à l'infini amont $P_\infty$ de l'aéronef 2. C'est-à-dire qu'on détermine la deuxième valeur du dérapage $\beta'$ à partir du quotient suivant :

$$\frac{(Pi_A - Pi_B)}{(Pt_A - P_\infty)}$$

En effet, de manière connue, ce quotient est une fonction quasi-linéaire du dérapage de l'aéronef 2. Cette fonction quasi-linéaire est également obtenue par l'étalonnage initial.

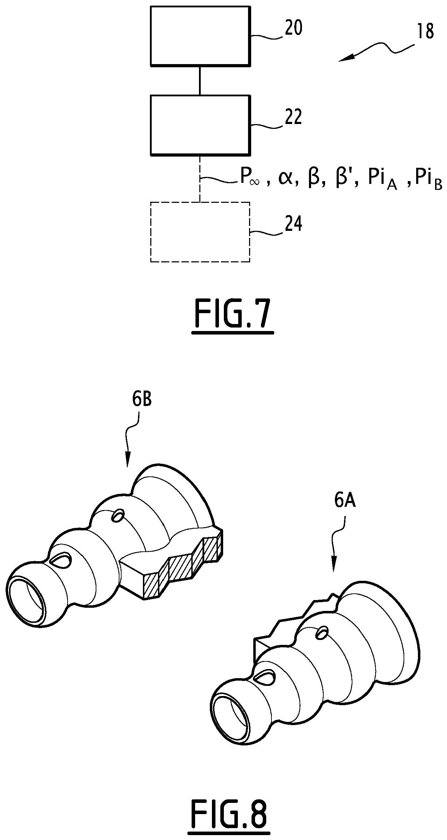

Toujours dans le cadre de cette variante, le procédé comprend en outre une étape de validité 24 (en pointillés sur la Figure 7), au cours de laquelle on compare les première et deuxième valeurs de dérapage $\beta$ et $\beta'$ et on détermine une information d'état de fonctionnement des sondes de mesure 6A, 6B à partir du résultat de la comparaison.

Plus spécifiquement, par exemple, on compare la valeur absolue de la différence entre $\alpha$ et $\beta'$ à une valeur seuil prédéterminée, par exemple 2°, et on détermine que les sondes de mesure sont en bon état de fonctionnement si la valeur absolue de la différence entre $\beta$

et β' est inférieure à cette valeur seuil. A l'inverse, si la valeur absolue de cette différence est supérieure à la valeur seuil, on détermine qu'il existe un dysfonctionnement sur l'une des sondes. Ceci donne par exemple lieu à un message d'alerte à destination du pilote et/ou au déclenchement d'un mode de diagnostic des sondes de mesure 6A, 6B.

Le procédé selon cette variante de l'invention permet de vérifier la validité des mesures effectuées à partir de deux sondes de mesure.

En variante, en référence à la Figure 8, la première sonde de mesure 6A présente un coefficient de pression Kps$_A$ vérifiant la relation (4) suivante :

$$Kps_A = \frac{-Kpa}{(1-Kpa)} \ (4).$$

Dans la mesure où la première sonde de mesure 6A est disposée dans la première zone 14, cette relation est vérifiée pour toutes les valeurs du dérapage et de l'incidence de l'aéronef.

En injectant les relations (1) et (3) dans la relation (4), on aboutit à la relation suivante : $Ps_A = P_\infty$. Autrement dit, la mesure de pression statique Ps$_A$ déterminée via la première sonde de mesure 6A correspond à la pression statique à l'infini amont P$_\infty$ de l'aéronef 2. A noter qu'on dit alors que la première sonde de mesure 6A est aérodynamiquement compensée.

Dans le procédé selon cette variante, au cours de l'étape de détermination de paramètres de vol 22, on prend la pression statique à l'infini amont de l'aéronef P$_\infty$ égale à la première mesure de la pression statique Ps$_A$.

En variante, la deuxième sonde de mesure 6B est disposée dans la deuxième zone 16 symétrique de la zone première 14 par rapport au plan de symétrie P, les sondes de mesure 6A, 6B sont identiques, et la deuxième sonde de mesure 6B vérifie également la relation (4), c'est-à-dire que : $Kps_B = \frac{-Kpa}{(1-Kpa)}$. Lors du procédé selon cette variante, on choisit alors la pression statique à l'infini amont de l'aéronef P$_\infty$ égale à l'une ou l'autre des mesures de pression statique Ps$_A$, Ps$_B$.

Alternativement, dans certains modes de réalisation dans lesquels la deuxième sonde de mesure 6B est disposée dans la deuxième zone 16 symétrique de la première zone 14 par rapport au plan de symétrie P, la deuxième sonde de mesure 6B vérifie la relation (4) et la première sonde 6A ne vérifie pas la relation (4). Au cours du procédé 18, on choisit alors la pression statique à l'infini amont de l'aéronef P$_\infty$ égale à la mesure de la pression statique fournie par la deuxième sonde de mesure 6B qui vérifie la relation (4), c'est-à-dire qui est aérodynamiquement compensée.

En pratique, la compensation aérodynamique d'une sonde est réalisée en conférant à la sonde une forme spécifique, ainsi qu'en conférant aux orifices dont elle est pourvue des dimensions et des emplacements spécifiques. Cette forme, ces dimensions et ces emplacements sont spécifiques à chaque aéronef, chaque aéronef disposant d'un coefficient de pression qui lui est propre. La forme et les spécificités de la sonde sont par exemple déterminées par CFD, puis confirmées en soufflerie et/ou par des essais en vol. Dans l'exemple de la Figure 8, la ou les sondes de mesure sont des sondes Pitot-statiques dont le tube présente une surface externe présentant au moins une ondulation.

Comme indiqué précédemment, le placement de l'une ou l'autre des sondes de mesure 6A, 6B dans une zone 14, 16 dans laquelle le coefficient de pression de l'aéronef 2 est une fonction de l'incidence locale unique quelles que soient les valeurs du dérapage et de l'incidence de l'aéronef a pour effet de permettre la détermination de la pression statique à l'infini amont de l'aéronef à partir d'une seule sonde de mesure. Le système de mesure de paramètres de vol correspondant est alors de conception grandement simplifiée.

En outre, l'utilisation d'une sonde de mesure ainsi agencée permet de déterminer deux mesures distinctes du dérapage de l'aéronef à partir de deux sondes de mesure au lieu de trois. La validité des mesures effectuées par les deux sondes peut ainsi être testée sans recourir à une troisième sonde de mesure.

L'agencement des sondes de mesure 6A, 6B dans la première zone 14 pour l'une et dans la deuxième zone 16 symétrique de la première zone 14 par rapport au plan P permet d'aboutir à deux mesures de la pression statique à l'infini amont de l'aéronef à partir de deux sondes. Cette redondance augmente la sûreté de fonctionnement et la disponibilité du système de mesure de paramètres de vol correspondant.

L'utilisation d'une sonde aérodynamiquement compensée permet de réaliser la compensation de la perturbation de pression engendrée par l'avion et la sonde directement physiquement via la sonde elle-même. La pression statique à l'infini amont de l'aéronef ne requiert donc plus d'être déduite numériquement d'autres grandeurs.

L'immobilité des moyens de mesure de la pression statique et des moyens de mesure de la pression totale des sondes de mesure 6A, 6B par rapport au fuselage 4 a pour effet que le coefficient de pression de la sonde Kps varie avec l'incidence locale.

A l'inverse, le fait que la ou les sondes de mesure soient montées mobiles dans leur ensemble a pour effet que le coefficient de pression de la ou des sondes correspondantes est une fonction constante de l'incidence locale.

Ceci a notamment pour effet que dans les modes de réalisation dans lesquels les sondes de mesure 6A, 6B sont identiques et montées mobiles et dans lesquels on détermine une deuxième valeur du dérapage β' de l'aéronef 2, cette détermination est simplifiée : en effet, les perturbations de pression sont les mêmes pour les deux sondes de mesure 6A, 6B, de sorte que la deuxième valeur de dérapage β' est déterminée directement à partir de la différence entre les pressions statiques $Ps_A$ et $Ps_B$, plutôt que par la différence entre les pressions indépendantes $Pi_A$ et $Pi_B$. Cette différence est toujours divisée par la différence entre une mesure de la pression totale et la pression statique à l'infini amont de l'aéronef $P_\infty$.

En variante encore, l'une ou les sondes de mesure 6A, 6B ne comportent pas de moyens de mesure de la pression totale 12A, 12B. Dans ces modes de réalisation, les moyens de mesure de l'incidence locale 10A, 10B de la ou les sondes de mesure correspondantes ne sont pas des moyens de mesure pneumatiques. En outre, l'aéronef comprend des moyens de mesure de la pression totale fournissant les mesures de pression totale requises pour la mise en oeuvre du procédé.

Préférentiellement, les valeurs des différents paramètres associées à une sonde de mesure donnée sont déterminées à partir des mesures effectuées par la sonde de mesure correspondante. Par exemple, dans les modes de réalisation précédemment décrits, on détermine le coefficient de pression Kpsa de la première sonde de mesure 6A à partir de la pression statique $Ps_A$, de l'incidence locale $\alpha_{locA}$, et de la pression totale $Pt_A$ fournies par la première sonde de mesure 6A.

Toutefois, dans certains modes de réalisation, on détermine la valeur des différents paramètres associés à une sonde de mesure à partir d'une ou plusieurs mesures effectuées par l'autre sonde de mesure.

Dans d'autres modes de réalisation, les modes de réalisation précédemment décrits et techniquement compatibles entre eux sont combinés.

**Revendications**

1. Aéronef comportant un fuselage (4) et une première sonde de mesure (6A) comprenant des moyens de mesure d'une incidence locale (10A) correspondant à l'incidence de la première sonde (6A), des moyens de mesure de la pression statique (8A) et éventuellement des moyens de mesure de la pression totale (12A), le fuselage (4) comportant au moins une première zone (14) où le coefficient de pression de l'aéronef (Kpa) est une fonction de l'incidence locale ($\alpha_{loc}$, $\alpha_{locA}$, $\alpha_{locB}$) qui est unique quelles que soient les valeurs du dérapage (β) et de l'incidence (α) de l'aéronef, **caractérisé en ce que** la première sonde de mesure (6A) est agencée dans ladite première zone (14).

2. Aéronef selon la revendication 1, **caractérisé en ce qu'**il comporte une deuxième sonde de mesure (6B) comprenant des moyens secondaires de mesure d'une incidence locale (10B) correspondant à l'incidence de la deuxième sonde (6B), des moyens secondaires de mesure de la pression statique (8B) et éventuellement des moyens secondaires de mesure de la pression totale (12B).

3. Aéronef selon la revendication 2, **caractérisé en ce que** la deuxième sonde de mesure (6B) est agencée sur le fuselage (4) dans une deuxième zone (16) symétrique de la première zone (14) par rapport à un plan de symétrie vertical (P) de l'aéronef (2).

4. Aéronef selon l'une quelconque des revendications précédentes, **caractérisé en ce que** les moyens de mesure de la pression statique (8A, 8B) et les moyens de mesure de la pression totale (12A, 12B) de la ou chaque sonde de mesure (6A, 6B) sont immobiles par rapport au fuselage (4) de l'aéronef (2).

5. Aéronef selon l'une quelconque des revendications précédentes, **caractérisé en ce qu'**au moins une sonde de mesure (6A, 6B) présente un coefficient de pression ($Kps_A$, $Kps_B$) vérifiant la relation :

$$Kps = \frac{-Kpa}{(1-Kpa)},$$

où Kps est le coefficient de pression de ladite sonde de mesure (6A, 6B) et Kpa est le coefficient de pression de l'aéronef (2).

6. Procédé de détermination de paramètres de vol d'un aéronef selon l'une quelconque des revendications précédentes, comprenant une étape de mesure (20), au cours de laquelle, via la première sonde de mesure (6A), on réalise au moins une première mesure de la pression statique ($Ps_A$) et une première mesure de l'incidence locale ($\alpha_{locA}$).

7. Procédé selon la revendication 6, **caractérisé en ce qu'**il comprend en outre une étape de détermination de paramètres de vol (22) au cours de laquelle on détermine au moins une valeur de la pression statique à l'infini amont de l'aéronef ($P_\infty$).

8. Procédé selon la revendication 7, **caractérisé en ce qu'**au cours de l'étape de détermination de paramètres de vol (22), on détermine la valeur du coefficient de pression de la première sonde de mesure ($Kps_A$) et la valeur du coefficient de pression de l'aéronef (Kpa) à partir de la première mesure de l'incidence locale ($\alpha_{locA}$).

9. Procédé selon la revendication 8, **caractérisé en ce qu'**au cours de l'étape de mesure (20), on réalise en outre une mesure de la pression totale ($Pt_A$, $Pt_B$), et **en ce qu'**au cours de l'étape de détermination de paramètres de vol (22), on détermine une valeur d'une pression statique indépendante ($Pi_A$) associée à la première sonde de mesure (6A) à partir du coefficient de pression de la première sonde de mesure ($Kps_A$), de la première mesure de pression statique ($Ps_A$) et de la mesure de pression totale ($Pt_A$, $Pt_B$), et on détermine la valeur de la pression statique à l'infini amont de l'aéronef ($P_\infty$) à partir du coefficient de pression de l'aéronef ($Kpa$), de la mesure de pression totale ($Pt_A$, $Pt_B$) et de ladite pression statique indépendante ($Pi_A$).

10. Procédé selon la revendication 6 ou 7 pour la détermination de paramètres de vol d'un aéronef selon la revendication 5, dans lequel la pression statique à l'infini amont de l'aéronef ($P_\infty$) est prise égale à la pression statique ($Ps_A$, $Ps_B$) mesurée via la ou l'une des sondes de mesure (6A, 6B) dont le coefficient de pression ($Kps_A$, $Kps_B$) vérifie la relation :

$$Kps = \frac{-Kpa}{(1-Kpa)}.$$

11. Procédé selon l'une quelconque des revendications 7 à 10 pour la détermination de paramètres de vol d'un aéronef selon la revendication 2 ou 3, **caractérisé en ce qu'**au cours de l'étape de mesure (20), on réalise en outre une deuxième mesure de l'incidence locale ($\alpha_{locB}$) via la deuxième sonde de mesure (6B), et **en ce qu'**au cours de l'étape de détermination de paramètres de vol (22), on détermine une première valeur du dérapage ($\beta$) et une première valeur de l'incidence ($\alpha$) de l'aéronef (2) à partir des première et deuxième mesures de l'incidence locale ($\alpha_{locA}$, $\alpha_{locB}$).

12. Procédé selon la revendication 9 ou 10 pour la détermination de paramètres de vol d'un aéronef selon la revendication 2 ou 3, **caractérisé en ce qu'**au cours de l'étape de détermination de paramètres de vol (22), on détermine une deuxième valeur du dérapage ($\beta'$) de l'aéronef (2) à partir de la première mesure de la pression statique ($Ps_A$) et d'une mesure de la pression statique ($Ps_B$) réalisée via la deuxième sonde de mesure (6B), d'une mesure de la pression totale ($Pt_A$, $Pt_B$) et de la valeur de la pression statique à l'infini amont de l'aéronef ($P_\infty$).

13. Procédé selon les revendications 11 et 12, **caractérisé en ce qu'**il comprend en outre une étape de validité (24), au cours de laquelle on compare les première et deuxième valeurs du dérapage ($\beta$, $\beta'$) de l'aéronef (2).

## Patentansprüche

1. Luftfahrzeug, einen Rumpf (4) und eine erste Messsonde (6A) umfassend, die Mittel (10A) zum Messen eines lokalen Anstellwinkels, der dem Anstellwinkel der ersten Sonde (6A) entspricht, Mittel (8A) zum Messen des statischen Drucks und gegebenenfalls Mittel (12A) zum Messen des Gesamtdrucks umfasst, wobei der Rumpf (4) mindestens eine erste Zone (14) aufweist, in der der Druckbeiwert (Kpa) des Luftfahrzeugs eine Funktion des lokalen Anstellwinkels ($\alpha_{loc}$, $\alpha_{locA}$, $\alpha_{locB}$) ist, der eindeutig ist, wie auch immer die Werte des Schiebewinkels ($\beta$) und des Anstellwinkels ($\alpha$) des Luftfahrzeugs sind, **dadurch gekennzeichnet, dass** die erste Messsonde (6A) in der ersten Zone (14) angeordnet ist.

2. Luftfahrzeug nach Anspruch 1, **dadurch gekennzeichnet, dass** es eine zweite Messsonde (6B) aufweist, die Sekundärmittel (10B) zum Messen eines lokalen Anstellwinkels entsprechend dem Anstellwinkel der zweiten Sonde (6B), Sekundärmittel (8B) zum Messen des statischen Drucks und gegebenenfalls Sekundärmittel (12B) zum Messen des Gesamtdrucks umfasst.

3. Luftfahrzeug nach Anspruch 2, **dadurch gekennzeichnet, dass** die zweite Messsonde (6B) an dem Rumpf (4) in einer zweiten Zone (16) symmetrisch zur ersten Zone (14) in Bezug auf eine senkrechte Symmetrieebene (P) des Luftfahrzeugs (2) angeordnet ist.

4. Luftfahrzeug nach einem beliebigen der vorhergehenden Ansprüche, **dadurch gekennzeichnet, dass** die Mittel (8A, 8B) zum Messen des statischen Drucks und die Mittel (12A, 12B) zum Messen des Gesamtdrucks der oder jeder Messsonde (6A, 6B) in Bezug auf den Rumpf (4) des Luftfahrzeugs (2) feststehend sind.

5. Luftfahrzeug nach einem beliebigen der vorhergehenden Ansprüche, **dadurch gekennzeichnet, dass** mindestens eine Messsonde (6A, 6B) einen Druckbeiwert ($Kps_A$, $Kps_B$) aufweist, der die Beziehung:

$$Kps = \frac{-Kpa}{(1-Kpa)}$$

erfüllt, wobei Kps der Druckbeiwert der Messsonde (6A, 6B) ist und Kpa der Druckbeiwert des Luftfahrzeugs (2) ist.

6. Verfahren zur Bestimmung von Flugparametern eines Luftfahrzeugs nach einem beliebigen der vorhergehenden Ansprüche, das einen Messschritt (20) umfasst, bei dem mindestens eine Messung des statischen Drucks ($Ps_A$) und eine erste Messung des lokalen Anstellwinkels ($\alpha_{locA}$) mittels der ersten Messsonde (6A) durchgeführt wird.

**7.** Verfahren nach Anspruch 6, **dadurch gekennzeichnet, dass** es außerdem einen Schritt (22) zur Bestimmung von Flugparametern umfasst, bei dem mindestens ein Wert des statischen Drucks im Unendlichen stromaufwärts zum Luftfahrzeug ($P_\infty$) bestimmt wird.

**8.** Verfahren nach Anspruch 7, **dadurch gekennzeichnet, dass** während des Schrittes (22) zur Bestimmung von Flugparametern der Wert des Druckbeiwerts ($Kps_A$) der ersten Messsonde und der Wert des Druckbeiwerts (Kpa) des Luftfahrzeugs aus der ersten Messung des lokalen Anstiegswinkels ($\alpha_{locA}$) bestimmt werden.

**9.** Verfahren nach Anspruch 8, **dadurch gekennzeichnet, dass** während des Messschritts (20) außerdem eine Messung des Gesamtdrucks ($Pt_A$, $Pt_B$) durchgeführt wird und dass während des Schritts (22) zur Bestimmung von Flugparametern ein Wert eines unabhängigen statischen Drucks ($Pi_A$), der der ersten Messsonde (6A) zugeordnet ist, aus dem Druckbeiwert ($Kps_A$) der ersten Messsonde, der ersten Messung des statischen Drucks ($Ps_A$) und der Messung des Gesamtdrucks ($Pt_A$, $Pt_B$) bestimmt wird und der Wert des statischen Drucks im Unendlichen stromaufwärts zum Luftfahrzeugs ($P_\infty$) aus dem Druckbeiwert (Kpa) des Luftfahrzeugs, der Messung des Gesamtdrucks ($Pt_A$, $Pt_B$) und dem unabhängigen statischen Druck ($Pi_A$) bestimmt wird.

**10.** Verfahren nach Anspruch 6 oder 7 für die Bestimmung von Flugparametern eines Luftfahrzeugs nach Anspruch 5, bei dem der statische Druck im Unendlichen stromaufwärts zum Luftfahrzeug ($P_\infty$) als gleich zu dem statischen Druck ($Ps_A$, $Ps_B$) angenommen wird, der mittels der oder den Messsonden (6A, 6B) gemessen wird, dessen oder deren Druckbeiwert ($Kps_A$, $Kps_B$) die Beziehung:

$$Kps = \frac{-Kpa}{(1 - Kpa)}$$

erfüllt.

**11.** Verfahren nach einem beliebigen der Ansprüche 7 bis 10 für die Bestimmung von Flugparametern eines Luftfahrzeugs nach Anspruch 2 oder 3, **dadurch gekennzeichnet, dass** während des Messschritts (20) außerdem eine zweite Messung des lokalen Anstellwinkels ($\alpha_{locB}$) über die zweite Messsonde (6B) durchgeführt wird und dass während des Schritts (22) der Bestimmung von Flugparametern ein erster Wert des Schiebewinkels ($\beta$) und ein erster Wert des Anstellwinkels ($\alpha$) des Luftfahrzeugs (2) aus der ersten und zweiten Messung des lokalen Anstellwinkels ($\alpha_{locA}$, $\alpha_{locB}$) bestimmt werden.

**12.** Verfahren nach Anspruch 9 oder 10 für die Bestimmung von Flugparametern eines Luftfahrzeugs nach Anspruch 2 oder 3, **dadurch gekennzeichnet, dass** während des Schritts (22) der Bestimmung von Flugparametern ein zweiter Wert des Schiebewinkels ($\beta'$) des Luftfahrzeugs (2) aus der ersten Messung des statischen Drucks ($Ps_A$) und einer über die zweite Messsonde (6B) durchgeführten Messung des statischen Drucks ($Ps_B$), einer Messung des Gesamtdrucks ($Pt_A$, $Pt_B$) und dem Wert des statischen Drucks im Unendlichen stromaufwärts zum Luftfahrzeug ($P_\infty$) bestimmt wird.

**13.** Verfahren nach den Ansprüchen 11 und 12, **dadurch gekennzeichnet, dass** es außerdem einen Schritt (24) der Gültigkeit umfasst, bei dem der erste und zweite Wert des Schiebewinkels ($\beta$, $\beta'$) des Luftfahrzeugs (2) verglichen werden.

**Claims**

**1.** An aircraft including a fuselage (4) and a first measuring probe (6A) comprising means for measuring the local incidence (10A) corresponding to the incidence of the first probe (6A), means for measuring the static pressure (8A) and optionally means for measuring the total pressure (12A), wherein the fuselage (4) includes at least one first zone (14) where the pressure coefficient of the aircraft (Kpa) depends on the local incidence ($\alpha_{loc}$, $\alpha_{locA}$, $\alpha_{locB}$), which is unique irrespective of the sideslip ($\beta$) and incidence ($\alpha$) values of the aircraft, **characterized in that** the first measuring probe (6A) is arranged in said first zone (14).

**2.** The aircraft according to claim 1, **characterized in that** the aircraft includes a second measuring probe (6B) comprising secondary means for measuring the local incidence (10B) corresponding to the incidence of the second probe (6B), secondary means for measuring the static pressure (8B), and optionally secondary means for measuring the total pressure (12B).

**3.** The aircraft according to claim 2, **characterized in that** the second measuring probe (6B) is arranged on the fuselage (4) in a second zone (16) symmetrical with the first zone (14) relative to a vertical plane of symmetry (P) of the aircraft (2).

**4.** The aircraft according to any one of the previous claims, **characterized in that** the means for measuring the static pressure (8A, 8B) and the means for measuring the total pressure (12A, 12B) of the or each measuring probe (6A, 6B) are immobile relative to the fuselage (4) of the aircraft (2).

**5.** The aircraft according to any one of the previous claims, **characterized in that** at least one measuring probe (6A, 6B) has a pressure coefficient ($Kps_A$, $Kps_B$) verifying the relationship:

$$Kps = \frac{-Kpa}{(1-Kpa)},$$

where Kps is the pressure coefficient of said measuring probe (6A, 6B) and Kpa is the pressure coefficient of the aircraft (2).

**6.** A method for determining flight parameters of an aircraft according to any one of the previous claims, comprising a measuring step (20) during which at least one first measurement of the static pressure ($Ps_A$) and one first measurement of the local incidence ($\alpha_{locA}$) are done via the first measuring probe (6A).

**7.** The method according to claim 6, **characterized in that** it further comprises a step for determining flight parameters (22) during which at least one value of the upstream infinity static pressure ($P_\infty$) of the aircraft (2) is determined.

**8.** The method according to claim 7, **characterized in that** during the step for determining flight parameters(22), the value of the pressure coefficient of the first measuring probe ($Kps_A$) and the value of the pressure coefficient of the aircraft (Kpa) are determined from the first local incidence measurement $\alpha_{locA}$).

**9.** The method according to claim 8, **characterized in that** a measurement of the total pressure ($Pt_A$, $Pt_B$) is also done during the measuring step (20), and **in that** during the step for determining flight parameters (22), a value of an independent static pressure ($Pi_A$) associated with the first measuring probe (6A) is determined from the pressure coefficient of the first measuring probe ($Kps_A$), the first static pressure measurement ($Ps_A$) and the total pressure measurement ($Pt_A$, $Pt_B$), and the value of the upstream infinity static pressure of the aircraft ($P_\infty$) is determined from the pressure coefficient of the aircraft (Kpa), the total pressure measurements ($Pt_A$, $Pt_B$) and said independent static pressure ($Pi_A$).

**10.** The method according to claims 6 or 7 for determining flight parameters of an aircraft according to claim 5, wherein the upstream infinity static pressure of the aircraft ($P_\infty$) is taken to be equal to the static pressure ($Ps_A$, $Ps_B$) measured via the or one of the measuring probes (6A, 6B) whereof the pressure coefficient ($Kps_A$, $Kps_B$) verifies the relationship:

$$Kps = \frac{-Kpa}{(1-Kpa)}.$$

**11.** The method according to any one of claims 7 to 10 for determining flight parameters of an aircraft according to claim 2 or 3, wherein during the measuring step (20), a second measurement of the local incidence ($\alpha_{locB}$) is also done via the second measuring probe (6B), and wherein during the step for determining flight parameters (22), a first value of the sideslip ($\beta$) and a first value of the incidence ($\alpha$) of the aircraft (2) are determined from first and second measurements of the local incidence ($\alpha_{locA}$, $\alpha_{locB}$).

**12.** The method according to claims 9 or 10 for determining flight parameters of an aircraft according to claim 2 or 3, wherein during the step for determining flight parameters (22), a second value of the sideslip ($\beta'$) of the aircraft (2) is determined from the first measurement of the static pressure ($Ps_A$) and a measurement of the static pressure ($Ps_B$) done via the second measuring probe (6B), a measurement of the total pressure ($Pt_A$, $Pt_B$) and the value of the upstream infinity static pressure of the aircraft ($P_\infty$).

**13.** The method according to claims 11 and 12, **characterized in that** the method further comprises a validation step (24), during which the first and second values of the sideslip ($\beta$, $\beta'$) of the aircraft (2) are compared.

2  4  6B  16  14  6A  P

EP 2 821 347 B1

6B (Kps$_B$)

8B (Ps$_B$)

10B (α$_{locB}$)

12B (Pt$_B$)

10A (α$_{locA}$)

6A (Kps$_A$)

8A (Ps$_A$)

12A (Pt$_A$)

## FIG.2

6A

12A

10A

8A

## FIG.3

10A

6A

8A

12A

## FIG.4

Kps

## FIG.5

Kpa

α_loc

## FIG.6

20

18

22

$P_\infty$ , $\alpha$, $\beta$, $\beta'$, $Pi_A$ ,$Pi_B$

24

## FIG.7

6B

6A

## FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 1354212 B1